# DEMANDE DE BREVET EUROPEEN

(11) **EP 4 660 053 A1**
(43) Date de publication de la demande: **10.12.2025**
(21) Numéro de dépôt: 25180083.5
(22) Date de dépôt: 02.06.2025
(51) Int. Cl.: B62D 21/11, B62D 25/08

(54) **DISPOSITIF DE SUPPORT MULTIFONCTION POUR VÉHICULE AUTOMOBILE**

(30) Priorité: 04.06.2024 FR 2405861
(71) Demandeur: Renault s.a.s, 92100 Boulogne Billancourt (FR)
(72) Inventeur: RAMOS, Christophe, 78640 VILLIERS-SAINT-FREDERIC (FR)

(57) **Abrégé**

Dispositif de support (2) multifonction pour véhicule automobile, comprenant une traverse (3) et une pluralité de tirants (4) configurés pour être fixés au moins au niveau d'un berceau et/ou d'une structure de caisse du véhicule (10) par-dessous, un corps (5) configuré pour supporter au moins un premier composant et une pluralité de pattes (6), reliées à la traverse (3), configurées pour porter au moins un deuxième composant et au moins un troisième composant.

## Description

L'invention concerne un dispositif de support multifonction pour un véhicule automobile ainsi qu'un agencement le comprenant. L'invention concerne également un véhicule comprenant ledit dispositif de support et/ou agencement. L'invention porte enfin sur un procédé de montage d'un agencement selon l'invention.

Dans le milieu automobile, il est connu d'équiper la structure avant des véhicules de supports multiples distincts, configurés pour supporter différents composants équipant la face avant. De tels supports sont classiquement montés sur le berceau et/ou la structure de caisse du véhicule, par exemple par fixation sur des pièces de renfort et/ou des tirants, séparément les uns des autres. De tels agencements s'accompagnent néanmoins d'une démultiplication des références et, par extension, d'une augmentation des coûts nécessaires à l'assemblage du véhicule. En outre, les interventions sur le véhicule, par exemple dans le cadre de l'assemblage, du remplacement ou de la réparation d'un composant ou système situé en face avant peuvent s'avérer complexes et chronophages en ce qu'elles peuvent nécessiter de multiples montages et démontages de systèmes et composants ne nécessitant pas d'intervention spécifique mais entravant l'accès au composant ou système ciblé.

La présente invention s'inscrit dans ce contexte et vise à proposer un dispositif de support pour un véhicule, notamment un compartiment avant de véhicule, permettant une meilleure accessibilité aux différents composants et systèmes équipant la structure avant du véhicule, une simplification de l'assemblage et du désassemblage des composants équipant le véhicule et une réduction des coûts impliqués dans la fixation des différents composants.

L'invention se rapporte à un dispositif de support multifonction pour véhicule automobile, comprenant :
- une traverse et une pluralité de tirants, dont au moins deux tirants reliés à des extrémités de ladite traverse, configurés pour être fixés au moins au niveau d'un berceau et/ou d'une structure de caisse du véhicule par-dessous de sorte à s'étendre au contact d'une surface inférieure dudit berceau et/ou de ladite structure de caisse ;
- un corps configuré pour supporter au moins un premier composant ;
- une pluralité de pattes, reliées à la traverse, chaque patte comprenant au moins une première zone de fixation, configurée pour porter au moins un deuxième composant, tel qu'un câble ou conduit, et une deuxième zone de fixation configurée pour porter au moins un troisième composant, tel qu'un câble ou conduit.

Notamment, les tirants s'étendent au moins en partie d'un premier côté d'un plan médian, s'étendant parallèlement à la traverse et la séparant en deux, et la pluralité de pattes s'étend essentiellement d'un deuxième côté, opposé au premier côté, dudit plan.

Optionnellement :
- le dispositif de support comprend, en outre, au moins un organe de support relié à la traverse apte à porter un composant additionnel du véhicule ; et/ou
- la traverse et/ou les tirants comprennent des ouvertures aptes à recevoir des moyens de fixation de sorte à porter au moins un composant additionnel.

Selon des alternatives de réalisation :
- la traverse et les tirants forment un ensemble monobloc ; ou
- les tirants sont rapportés et fixés à la traverse, notamment par soudage ou vissage.

Optionnellement, la pluralité de tirants comprend un tirant intermédiaire, disposé entre les tirants reliés aux extrémités de la traverse et configuré pour être fixé au moins au niveau du berceau et/ou de la structure de caisse du véhicule.

Notamment, les pattes sont rapportées et :
- fixées à la traverse par soudage ; ou
- fixées à la traverse par l'intermédiaire d'un moyen de fixation.

Optionnellement :
- la première zone de fixation et la deuxième zone de fixation des pattes sont disposées dans des plans distincts, transversaux, de sorte que le deuxième composant et le troisième composant s'étendent à distance non nulle le long d'au moins une direction ; et/ou
- au moins l'une des pattes est au moins en partie interposée entre le deuxième composant et le troisième composant le long d'au moins une direction.

L'invention porte également sur un agencement comprenant un dispositif de support selon l'invention et comprenant au moins un premier composant, un deuxième composant et/ou un troisième composant sélectionnés parmi un conduit de circulation d'un fluide, un câble, un calculateur, un groupe motopropulseur, un filtre ou un dispositif d'échappement du véhicule.

Optionnellement l'agencement comprend, en outre, au moins un composant additionnel sélectionné parmi les mêmes types de composants.

L'invention concerne également un véhicule automobile comprenant un berceau, une structure de caisse et un dispositif de support et/ou un agencement selon l'invention, la pluralité de tirants et/ou la traverse étant fixée(s) au niveau d'au moins l'une parmi des surfaces inférieures du berceau et de la structure de caisse par-dessous de sorte à s'étendre au contact de celle(s)-ci, lesdites surfaces inférieures étant configurées pour être tournées vers un sol sur lequel le véhicule est disposé.

Notamment, le véhicule comprend une partie avant et une partie arrière, le dispositif de support étant disposé de sorte que la pluralité de pattes et le deuxième côté du plan médian présentent une plus grande proximité avec la partie arrière du véhicule que les tirants et le premier côté du plan médian.

L'invention porte enfin sur un procédé de montage d'un agencement selon l'invention dans un véhicule comprenant :
- la fixation des pattes sur la traverse ;
- le positionnement et la fixation du premier composant, du deuxième composant et/ou du troisième composant sur le dispositif de support ; puis
- la fixation par-dessous du dispositif de support au niveau du berceau et/ou de la structure de caisse par l'intermédiaire des tirants et/ou de la traverse.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique d'un exemple de réalisation d'un dispositif de support.
La figure 2 une représentation schématique simplifiée vue de dessous d'un agencement selon l'invention comprenant un dispositif de support.
La figure 3 est une représentation schématique en perspective vue de dessus d'une partie de l'agencement.
La figure 4 est une représentation schématique en perspective vue de dessus d'une partie de l'agencement.
La figure 5 est une représentation schématique en perspective vue de dessous d'une partie de l'agencement.
La figure 6 est une représentation schématique d'une alternative de réalisation du dispositif de support.
La figure 7 est une représentation schématique d'une alternative de réalisation du dispositif de support.

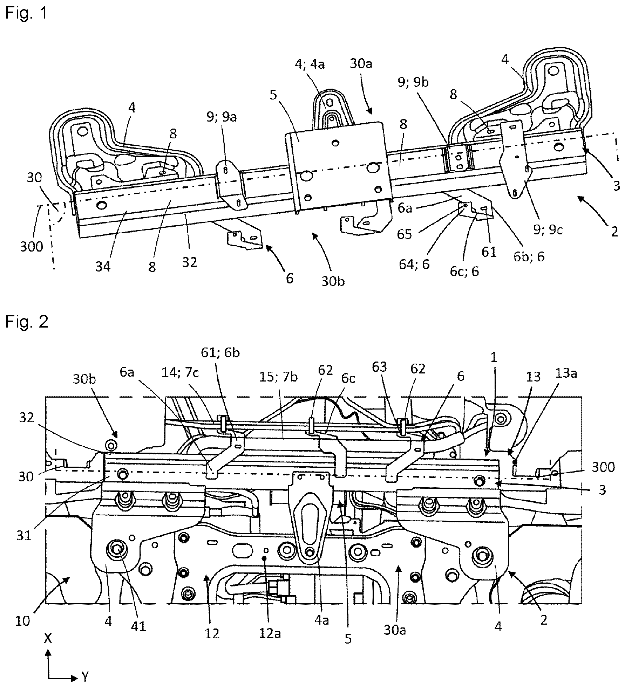

La figure 1 illustre schématiquement un exemple de réalisation d'un agencement 1 selon l'invention comprenant un dispositif de support 2 multifonction disposé au niveau de la structure avant d'un véhicule 10, notamment d'un véhicule 10 automobile. Le véhicule 10 considéré est, par exemple, un véhicule automobile à motorisation thermique comprenant, tel qu'illustré dans les différentes figures, un groupe motopropulseur thermique 11. De manière alternative, l'agencement 1 selon l'invention peut s'appliquer *mutatis mutandis* aux véhicules 10 à motorisation électrique comprenant un moteur électrique ou aux véhicules 10 à motorisation hybride. Le véhicule 10 peut, par exemple, être un véhicule particulier ou un véhicule utilitaire.

Par convention dans la description ci-après, la direction selon laquelle le véhicule 10 automobile se déplace en ligne droite est définie comme étant la direction longitudinale X, ladite direction pointant vers l'arrière du véhicule 10. La direction perpendiculaire à la direction longitudinale X et située dans un plan parallèle au sol est nommée direction transversale Y. La direction perpendiculaire aux directions X et Y est nommée direction verticale Z. Ainsi, on définit un repère direct XYZ représenté dans les figures le nécessitant. Les termes « supérieur » et « inférieur » s'entendent dans leur sens général, le terme « inférieur » désignant une proximité avec le sol plus importante. Également, les termes « premier », « deuxième » ont vocation à distinguer des éléments similaires et non à définir une hiérarchie au sein desdits éléments.

De manière générale, le véhicule 10 selon l'invention comprend un berceau 12, une structure de caisse 13, aussi qualifiée de soubassement, et un agencement 1 et/ou dispositif de support 2 selon l'invention configuré pour supporter une pluralité de composants à équiper dans le compartiment avant du véhicule 10. On entend notamment par « structure de caisse 13 » une structure formant le châssis du véhicule et comprenant des éléments tels que des longerons, des traverses de caisse ou des brancards équipant classiquement les véhicules 10. Tel que davantage exposé ci-après, les composants à équiper sont, par exemple et de manière non limitative, sélectionnés parmi un conduit 14 de circulation d'un fluide, un câble 15, un calculateur, une partie d'un groupe motopropulseur 11, un filtre et/ou un dispositif d'échappement 17 du véhicule 10.

De manière générale, le dispositif de support 2 comprend une traverse 3, une pluralité de tirants 4, un corps 5 configuré pour supporter au moins un composant et une pluralité de pattes 6 de fixation.

La traverse 3 s'étend au moins en partie le long d'une direction d'extension 300, par exemple configurée pour être parallèle ou sensiblement parallèle à la direction transversale Y au sein du véhicule 10. Notamment, la traverse 3 est un profilé au moins en partie rectiligne. De manière préférentielle, la traverse 3 est un profilé creux, de sorte à réduire la masse et le coût de la pièce. Selon des exemples de réalisation non limitatif, la traverse 3 est un profilé carré ou rectangulaire comprenant une pluralité de côtés. Alternativement, la traverse 3 est pleine.

On entend notamment par « tirant » un élément de renfort et/ou de liaison. Le dispositif de support 2 comprend une pluralité de tirants 4, dont au moins deux tirants 4 reliés à des extrémités de la traverse 3, délimitant la traverse 3 le long de la direction d'extension 300. Les tirants 4 sont configurés pour être fixé au moins au niveau du berceau 12 et/ou de la structure de caisse 13 du véhicule 10 par-dessous. Autrement dit, les tirants 4 sont configurés de sorte à s'étendre au contact d'une surface inférieure 12a dudit berceau 12 et/ou d'une surface inférieure 13a de ladite structure de caisse 13, lesdites surfaces inférieures 12a, 13a étant tournées vers le sol sur lequel est disposé le véhicule 10. Optionnellement, il en va de même pour la traverse 3 qui est configurée de sorte à s'étendre au contact de la surface inférieure 12a dudit berceau 12 et/ou de la surface inférieure 13a de ladite structure de caisse 13. Ainsi, le berceau 12 et/ou la structure de caisse 13 d'une part peu(ven)t être au moins en partie superposé(s) au dispositif de support 2 de sorte que ce dernier est au moins en partie interposé entre le berceau 12 et/ou la structure de caisse 13 part et le sol d'autre part le long d'au moins une direction, notamment ici le long de la direction verticale Z.

Un tel principe permet une fixation du dispositif de support 2, et par extension des composants qu'il porte, par-dessous le véhicule 10 permettant ainsi une meilleure accessibilité aux composants. Ainsi, le dispositif de support 2 présente un positionnement inférieur à au moins une partie du berceau 12 et/ou de la structure de caisse 13 sur lesquels il est monté. Tel que davantage exposé ci-après en référence au procédé de montage selon l'invention, le dispositif de support 2 peut ainsi être assemblé par le bas au niveau du berceau 12 et/ou de la structure de caisse 13, par intervention d'un technicien sous le véhicule 10. Des points de fixation du dispositif de support 2 sont ainsi accessibles depuis sous le véhicule 10 , facilitant le montage et le démontage de tout composant fixé sur le dispositif de support 2.

Une telle fixation est réalisée par l'intermédiaire d'une pluralité de points de fixation compris dans les différents tirants 4 et/ou dans la traverse, aptes à recevoir des éléments de fixation 41 tels que des vis et/ou un ensemble vis/écrou. Il est entendu que, dans l'ensemble de la description ci-après, toute description faite en référence à l'un des tirants 4 peut s'étendre à tout ou partie de la pluralité de tirants 4.

Les tirants 4 sont disposés au niveau des extrémités de la traverse 3 et sont ainsi reliés entre eux par l'intermédiaire de cette même traverse 3 de sorte à assurer la rigidité du dispositif de support 2 le long de la direction d'extension 300, ici la direction transversale Y, lorsque le dispositif de support 2 est équipé au sein du véhicule 10. La traverse 3 et les tirants 4 ont ainsi notamment fonction de renfort du berceau 12, notamment en cas d'impact frontal avec le véhicule 10. La traverse 3, et par extension le dispositif de support 2, a également fonction de mise en chape du véhicule 10, c'est-à-dire qu'elle permet d'équilibrer les différents comportements au sein du véhicule 10, notamment les comportements NVH**,** pour « Noise, Vibration, Harshness », correspondant aux comportements liés aux vibrations, au bruit et à la rugosité.

Les tirants 4 peuvent présenter des formes variables, les formes illustrées n'étant en rien limitatives. Optionnellement, les tirants 4 sont des pièces allongées reliées à la traverse 3 au niveau d'une première extrémité tandis qu'une deuxième extrémité, opposée, est configurée pour s'étendre vers l'avant du véhicule 10 lorsque le dispositif de support 2 est équipé dans celui-ci. Les tirants 4 s'étendent transversalement à la traverse 3. De manière préférentielle, les tirants 4 présentent une hauteur limitée de sorte à ne pas affecter la garde au sol du véhicule 10. On entend ici par « hauteur » une dimension mesurée le long de la direction verticale Z. De manière optionnelle mais préférentielle, les tirants 4 comprennent des renforts.

Selon l'exemple de réalisation illustré, les tirants 4 sont rapportés et fixés sur la traverse 3, par exemple par soudage et/ou vissage. Notamment, les tirants 4 sont reliés à un côté inférieur 31 de la traverse 3, c'est-à-dire à un côté le plus bas de la traverse 3 configuré pour être tourné vers le sol lorsque le dispositif de support 2 est équipé dans le véhicule 10, et/ou à un côté latéral 32 de la traverse 3, adjacent au côté inférieur 31.

Alternativement, la traverse 3 et au moins une partie des tirants 4 de la pluralité de tirants 4 forment un ensemble monobloc. On entend par « monobloc » que la traverse 3 et lesdits tirants 4 ne peuvent être dissociés les uns des autres sans résulter en la dégradation, voire la destruction de ceux-ci.

Notamment, les tirants 4 et la traverse 3 sont réalisés dans un matériau métallique tel que de la tôle, de l'aluminium et/ou de l'acier.

Optionnellement, tel qu'illustré à la figure 1, 2 ou 5, la pluralité de tirants 4 comprend au moins un tirant intermédiaire 4a disposé entre les tirants 4 reliés aux extrémités de la traverse 3 et configuré pour être fixé au moins au niveau du berceau 12 du véhicule 10. La description précédente relative aux tirants 4 s'applique *mutatis mutandis* au tirant intermédiaire 4a.

Le corps 5 est configuré pour supporter au moins un composant, notamment ici un premier composant 7a. En l'espèce, dans l'exemple illustré, le premier composant 7a est, de manière non limitative, une partie du groupe motopropulseur 11. En outre, ledit composant peut être compris dans l'agencement 1 selon l'invention. Notamment, le corps 5 est au moins en partie plan. De manière optionnelle mais préférentielle, le corps 5 est réalisé dans un matériau métallique, tel que de l'acier.

De manière préférentielle, le corps 5 est rapporté et fixé sur la traverse 3, par exemple par soudage et/ou vissage. La position du corps 5 peut ainsi être adaptée selon le besoin. Notamment, le corps 5 est disposé à distance des extrémités de la traverse 3, par exemple de sorte à présenter une position centrale ou sensiblement centrale. Afin de permettre la fixation du premier composant 7a considéré, le corps 5 et/ou le premier composant 7a comprend au moins un moyen de fixation tel qu'un clip et/ou une vis.

La pluralité de pattes 6 est reliée à la traverse 3. Notamment, la pluralité de pattes 6 comprend des pattes 6 rapportées et fixées à la traverse 3. La description ci-après est faite en référence à une patte 6, il est néanmoins entendu qu'elle s'étend aux différentes pattes 6 de la pluralité de pattes 6.

De manière générale, la patte 6 comprend une pluralité de segments. On entend par « segment » une partie d'un tout. Notamment, la patte 6 comprend au moins un premier segment 6a, configuré pour permettre la fixation de la patte 6 sur la traverse 3, un deuxième segment 6b, configuré pour porter au moins un deuxième composant 7b, et un troisième segment 6c, configuré pour porter au moins un troisième composant 7c. Notamment, le deuxième composant 7b et le troisième composant 7c sont sélectionnés parmi des câbles 15 de raccordement ou alimentation électriques et/ou des conduits 14 de circulation d'un fluide, tel que de l'urée, un fluide de refroidissement, des gaz d'échappement ou autre, davantage décrits ci-après.

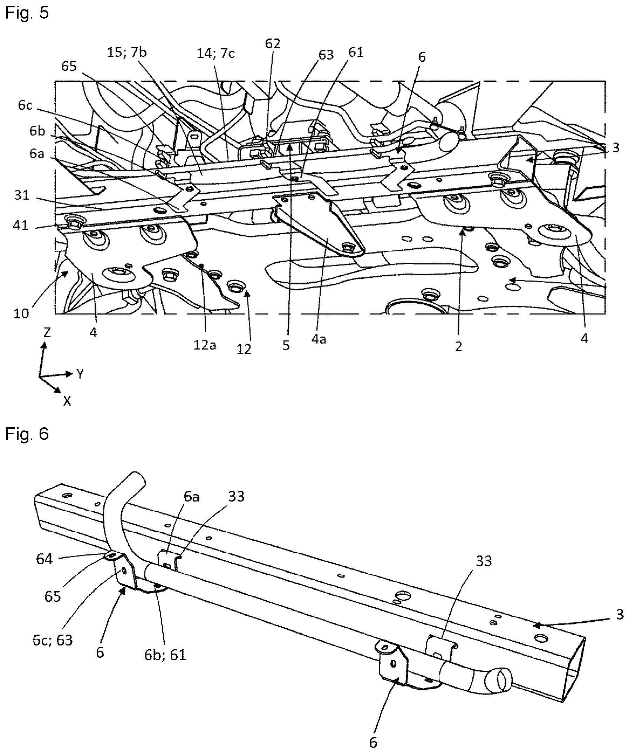

La patte 6 est fixé par soudage et/ou vissage à la traverse 3. De manière optionnelle mais préférentielle, la patte 6 est reliée au côté inférieur 31 ou à l'un des côté latéraux 32 de la traverse 3. Par exemple, tel qu'illustré à la figure 2, la patte 6, notamment le premier segment 6a de la patte 6, est fixé au côté inférieur 31 de la traverse 3. La figure 6 illustre une alternative de réalisation dans laquelle la patte 6, notamment le premier segment 6a de la patte 6, est apte à être fixé au côté latéral 32 de la traverse 3 par l'intermédiaire d'un moyen de fixation tel qu'un clip ou une vis, non représenté. Optionnellement, dans une telle alternative de réalisation, la traverse 3 comprend, en outre, une découpe 33 apte à recevoir au moins une partie de la patte 6, notamment au moins une partie du premier segment 6a. Tel qu'illustré à la figure 6, une partie du premier segment 6a s'étend alors dans un volume interne de la traverse 3, qui est alors creuse, de sorte à renforcer la fixation de la patte 6.

Optionnellement mais préférentiellement, afin d'optimiser le montage du dispositif de support 2 lorsque les tirants 4 sont rapportés, les pattes 6 et les tirants 4 sont reliés à un même côté de la traverse 3 ou à des côtés adjacents de la traverse 3.

De manière optionnelle mais préférentielle, la pluralité de pattes 6 est disposée de sorte à s'étendre d'un même côté de la traverse 3, les tirants 4 s'étendant au moins en partie d'un premier côté 30a d'un plan médian 30, s'étendant parallèlement à la traverse 3 et la séparant également en deux, et les pattes 6 s'étendant au moins en partie d'un deuxième côté 30b, opposé au premier côté 30a dudit plan. Notamment, les pattes 6 s'étendent essentiellement du deuxième côté 30b dudit plant. On entend ici par « essentiellement » qu'au moins 50% de chaque patte 6 considérée s'étend du deuxième côté 30b du plan médian 30.

Notamment, lorsque le dispositif de support 2 est équipé dans le véhicule 10, celui-ci est disposé de sorte que la pluralité de pattes 6 et le deuxième côté 30b du plan médian 30 présentent une plus grande proximité avec la partie arrière du véhicule 10 que les tirants 4 et le premier côté 30a du plan médian 30. Un tel principe permet d'assurer la protection des composants portés par les pattes 6, notamment ici le deuxième composant 7b et le troisième composant 7c, en cas de choc frontal à l'avant du véhicule 10, la traverse 3 étant alors disposée en amont d'au moins une partie des pattes 6 et des deuxième composant 7b et troisième composant 7c le long de la direction longitudinale X.

Le dispositif de support 2 comprend au moins deux pattes 6, voire, optionnellement mais préférentiellement, au moins trois pattes 6 disposées sur une longueur de la traverse 3, définie le long de la direction d'extension 300. Par exemple, les pattes 6 sont réparties à intervalle régulier le long de la longueur de la traverse 3.

Les figures 1 à 7 illustrent des exemples de réalisation non limitatifs des pattes 6 du dispositif de support 2.

Dans les différents exemples illustrés, la patte 6 est configurée pour s'étendre au moins en partie en regard de la traverse 3 le long d'au moins une direction. En l'espèce, la patte 6 s'étend en regard de la traverse 3 en évoluant le long de la direction longitudinale X de sorte que la patte 6 considérée et la traverse 3 sont traversées par au moins un axe parallèle à la direction longitudinale X.

Le deuxième segment 6b de la patte 6, apte à porter le deuxième composant 7b, est configuré pour être interposé entre ledit composant et le sol lorsque le dispositif de support 2 est équipé dans le véhicule 10. Le deuxième segment 6b comprend une première zone de fixation 61, comprenant au moins un orifice, apte à recevoir un organe de fixation 62 tel qu'une agrafe ou un clip. Un tel principe permet d'assurer au moins en partie une protection dudit composant, le deuxième segment 6b présente ainsi une plus grande proximité avec le sol que le deuxième composant 7b le long de la direction verticale Z de sorte qu'en cas de choc il prévient un contact direct avec ledit composant. Également, la patte 6 est apte à entraver la trajectoire d'au moins une partie de projections, par exemple de gravillons.

Selon des alternatives de réalisation, visibles à la figure 1, le deuxième segment 6b s'étend perpendiculairement à la traverse 3 et au plan médian 30 ou, alternativement, le deuxième segment 6b est incliné relativement à la traverse 3 et au plan médian 30. Une telle alternative permet d'assurer un décalage, le long de la direction d'extension 300 et de la direction transversale Y dans le véhicule 10, entre une zone de liaison de la patte 6 sur la traverse 3 et la première zone de fixation 61 du deuxième composant 7b sur la patte 6, particulièrement sur le deuxième segment 6b. Un tel principe permet d'optimiser l'accessibilité aux différentes fixations et permet d'ajuster la fixation des différents composants dans le véhicule 10 en fonction de l'encombrement présent en face avant en utilisant des pattes 6 de différentes formes au sein du dispositif de support 2 de sorte à s'adapter à différents modèles et arrangements de véhicules 10.

Le troisième segment 6c, configuré pour porter le troisième composant 7c, s'étend transversalement, voire orthogonalement au deuxième segment 6b. Notamment, le deuxième segment 6b et le troisième segment 6c sont adjacents. Le troisième segment 6c est configuré pour être au moins en partie interposé entre le deuxième composant 7b et le troisième composant 7c. Le troisième segment 6c permet ainsi de maintenir une distance non nulle entre le deuxième composant 7b et le troisième composant 7c, limitant, voire prévenant, ainsi leur contact et interférence. Le troisième segment 6c comprend une deuxième zone de fixation 63, comprenant au moins un orifice, apte à recevoir un organe de fixation 62 tel qu'une agrafe ou un clip. La première zone de fixation 61 et la deuxième zone de fixation 63 des pattes 6 sont ainsi disposées dans des plans distincts, notamment transversaux, de sorte que le deuxième composant 7b et le troisième composant 7c s'étendent à distance non nulle le long d'au moins une direction.

L'organe de fixation 62 disposé dans la première zone de fixation 61 et l'organe de fixation 62 disposé dans la deuxième zone de fixation 63 s'étendent ainsi transversalement, voire orthogonalement, l'un à l'autre et s'étendent de part et d'autre du troisième segment 6c. De la sorte ils n'interfèrent pas l'un avec l'autre et il en va de même pour les composants montés au niveau desdites zones. Un tel principe permet l'espacement de la première zone de fixation 61 et de la deuxième zone de fixation 63, et par extension du deuxième composant 7b et du troisième composant 7c, le long d'au moins une direction, voire le long de deux directions orthogonales l'une à l'autre. En l'espèce lesdites zones de fixations présentent un espacement le long de la direction longitudinale X et le long de la direction verticale Z.

La patte 6 comprend ainsi une forme en « L » ou sensiblement en « L » formée par le deuxième segment 6b et le troisième segment 6c. Lorsque la patte 6 est montée sur la traverse 3, leur coopération forme ainsi une gouttière ou un logement, par exemple s'inscrivant dans une forme en « U » délimitée par la patte 6 d'une part et l'un des côtés de la traverse 3 d'autre part, une telle gouttière étant apte à recevoir au moins l'un des composants, en l'espèce au moins le deuxième composant 7b.

Optionnellement, la patte 6 comprend une languette 64, formant une extrémité libre de la patte 6 et reliée, directement ou indirectement, au troisième segment 6c. La patte 6 est apte à assurer une fonction de soutien et/ou de fixation. Optionnellement, tel qu'illustré aux figures 1, 3 ou 6, la languette 64 comprend une troisième zone de fixation 65 comprenant au moins un orifice apte à recevoir un organe de fixation 62 de sorte à porter au moins un quatrième composant 7d. Selon des alternatives non limitatives, le quatrième composant 7d est sélectionné parmi un câble 15 ou un conduit 14 tel que décrit précédemment, ou le quatrième composant 7d peut être une partie du calculateur, du groupe motopropulseur 11 ou du dispositif d'échappement 17 du véhicule 10.

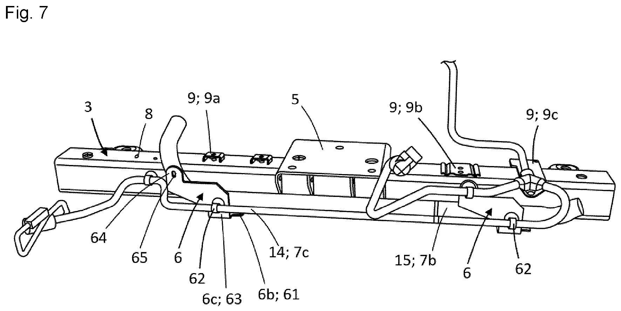

Ladite languette 64 s'étend, selon un exemple de réalisation illustré à la figure 1, 3 ou 6, transversalement, voire orthogonalement au troisième segment 6c, par exemple lorsque la languette 64 est directement reliée audit segment. Alternativement, tel que représenté à la figure 7, la languette 64 s'étend dans un plan parallèle, ou sensiblement parallèle au troisième segment 6c, par exemple lorsque la languette 64 et le troisième segment 6c sont séparés par un segment intermédiaire.

Optionnellement, la patte 6 comprend au moins un élément de renfort.

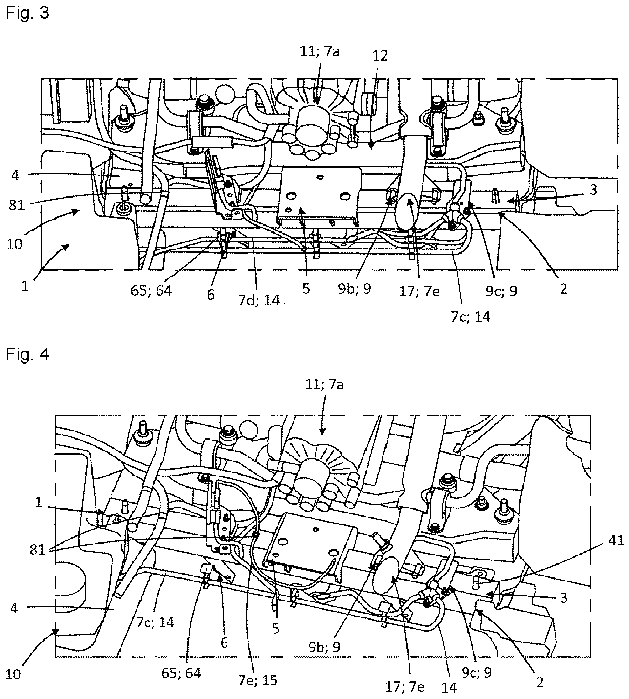

Le dispositif de support 2 est également apte à maintenir un ou plusieurs composant(s) additionnel(s) 7e. Optionnellement, la traverse 3 et/ou les tirants 4 peu(ven)t comprendre des ouvertures 8 aptes à recevoir des moyens de fixation 81, visibles à la figure 3 ou 4, tels que des vis et/ou clips aptes à coopérer avec la traverse 3 et/ou les tirants 4. Optionnellement, de tels moyens de fixation 81 comprennent une bague ou pince apte à porter ou maintenir au moins un composant additionnel 7e et/ou aptes à participer au maintien des premier, deuxième, troisième et/ou quatrièmes composants 7a, 7b, 7c, 7d décrits plus haut. Alternativement, une périphérie extérieure d'un câble 15 ou d'un conduit 14 considéré peut comprendre un doigt ou un pion configuré pour être inséré dans l'une des ouvertures 8 du dispositif de support 2.

De manière optionnelle, le dispositif de support 2 comprend, en outre, au moins un organe de support 9, apte à porter au moins un composant additionnel 7e du véhicule 10. L'au moins un organe de support 9 est relié à la traverse 3. En l'espèce, le dispositif de support 2 comprend une pluralité d'organes de support 9. La description ci-après, faite en référence à un organe de support 9, s'étend à une pluralité d'organes de support 9. Notamment, l'organe de support 9 est réalisé dans un matériau métallique, tel que de la tôle, par exemple de l'acier. Alternativement, l'organe de support 9 est réalisé dans un matériau plastique, notamment chargé, par exemple chargé en fibres de verres tel que Polyéthylène Téréphtalate, ou PBT GF.

De manière optionnelle mais préférentielle, l'organe de support 9 est rapporté et fixé sur la traverse 3, par exemple par soudage ou vissage. Un tel principe permet avantageusement l'intégration d'organes de support 9 adaptés à des composants et/ou à des modèles de véhicules 10 spécifiques d'une part et permet une certaine modularité du dispositif de support 2 en adaptant la position d'un ou plusieurs organe(s) de support 9 au sein du dispositif de support 2 selon le besoin.

Alternativement, la traverse 3 et l'au moins un organe de support 9 forment un ensemble monobloc.

L'organe de support 9 est relié à au moins un côté de la traverse 3. Notamment, l'organe de support 9 est relié à un côté supérieur 34 de la traverse 3, opposé au côté inférieur 31, et/ou relié à l'un des côtés latéraux 32. L'organe de support 9 s'étend au moins en partie en regard de la traverse 3. De manière préférentielle, l'organe de support 9 est superposé à la traverse 3 le long de la direction verticale Z, notamment de sorte que la traverse 3 est interposée entre l'organe de support 9 et le sol sur lequel est disposé le véhicule 10 lorsque le dispositif de support 2 est équipé dans le véhicule 10. Ainsi, au moins un axe s'étendant parallèlement à la direction verticale Z passe par l'organe de support 9 et la traverse 3. De la sorte, tout composant additionnel 7e équipé sur l'au moins un organe de support 9 est protégé des chocs directs par la traverse 3 et au moins une partie des projections de gravillons peut être arrêtée par ladite traverse 3. De manière avantageuse, l'organe de support 9 est optionnellement disposé et conformé de sorte à s'étendre en porte-à-faux relativement à la traverse 3. Un tel principe permet d'adapter la position d'au moins l'un des composants additionnels 7e le long d'au moins une direction transversale à la traverse 3, en l'espèce le long de la direction longitudinale X, lorsque le dispositif de support 2 est équipé dans le véhicule 10.

Dans les exemples illustrés aux figures 1 à 5, non limitatifs, le dispositif de support 2 selon l'invention permet de porter le premier composant 7a, ici une partie du groupe motopropulseur 11, par l'intermédiaire du corps 5. La pluralité de pattes 6 est apte à porter un câble 15 électrique, ici par l'intermédiaire des deuxièmes segments 6b des pattes 6 tel qu'un câble 15 d'alimentation électrique bas voltage, par exemple 12V, pour l'alimentation une batterie de servitude, et/ou un câble 15 d'alimentation haut voltage, par exemple 400V, pour une batterie de motricité d'un véhicule 10 électrique ou hybride. La pluralité de pattes 6 est apte à porter un conduit 14 de circulation d'un fluide, par exemple d'urée, par l'intermédiaire des troisièmes segments 6c et/ou des languettes 64 des pattes 6. Les pattes 6 permettent avantageusement de limiter les déplacements du deuxième composant 7b et du troisième composant 7c limitant ainsi les risques de corrosion par frettage, ou « fretting corrosion » en anglais.

La traverse 3 et/ou les tirants 4 sont également aptes à porter une pluralité de composants additionnels 7e, ici un câble 15 électrique et/ou un conduit 14, par exemple de fluide de refroidissement, par l'intermédiaire des ouvertures 8.

Les organes de support 9 reliés à la traverse 3 permettent également de maintenir une pluralité de composants additionnels 7e. Notamment, un premier organe de support 9a est apte à porter le calculateur du véhicule 10, un deuxième organe de support 9b est apte à porter le dispositif d'échappement 17 du véhicule 10 tandis qu'un troisième organe de support 9c est apte à porter une conduit 14e, tel qu'une dérivation d'urée.

Le dispositif de support 2 et l'agencement 1 selon l'invention permettent ainsi avantageusement un accès simultané et simplifié à différents systèmes équipant la structure avant du véhicule 10. Notamment, tel qu'indiqué plus haut, le dispositif de support 2 assure également une fonction de protection des différents composants et, optionnellement, peut permettre une séparation spatiale d'au moins une partie des composants, par exemple de sorte à disposer des composants électriques sur une première portion de la traverse 3, tels que des câbles 15 électriques ou le calculateur, et des composants hydrauliques et/ou de circulation d'un fluide sur une deuxième portion de la traverse 3. Par exemple, la première portion de la traverse 3 et la deuxième portion de la traverse 3 sont disposées de part et d'autre du corps 5.

L'invention concerne également un procédé de montage de l'agencement 1 selon l'invention au sein d'un véhicule 10.

Le procédé comprend, dans un premier temps, l'assemblage du dispositif de support 2. Une telle étape comprend la fixation des pattes 6 sur la traverse 3. Optionnellement, une telle étape comprend la fixation des tirants 4 sur la traverse 3. Par exemple, les tirants 4 et les pattes 6 sont fixés sur un même côté de la traverse 3. Optionnellement encore, le procédé comprend la fixation d'au moins un organe de support 9 et/ou du corps 5 sur la traverse 3.

Le procédé comprend, ensuite, le positionnement et la fixation du premier composant 7a, du deuxième composant 7b et/ou du troisième composant 7c sur le dispositif de support 2. Optionnellement, il en va de même pour au moins un composant additionnel 7e tel que décrit plus haut. Notamment, les différents composants sont disposés de sorte à permettre une séparation spatiale d'au moins une partie des composants, par exemple de sorte à disposer des composants électriques sur la première portion de la traverse 3, tels que des câbles 15 électriques ou le calculateur, et des composants hydrauliques et/ou de circulation d'un fluide sur la deuxième portion de la traverse 3. Par exemple, la première portion de la traverse 3 et la deuxième portion de la traverse 3 sont disposées de part et d'autre du corps 5.

Enfin, le procédé comprend la fixation par-dessous du dispositif de support 2 portant les différents composants au niveau du berceau 12 et/ou de la structure de caisse 13 par l'intermédiaire des tirants 4. Notamment, le dispositif de support 2 est fixé au niveau du berceau 12 par l'intermédiaire des tirants 4 et au niveau de la structure de caisse 13 par l'intermédiaire de la traverse 3. Une telle fixation est réalisée, par exemple, par vissage. Autrement dit, les tirants 4 sont configurés de sorte à s'étendre au contact de la surface inférieure 12a dudit berceau 12 et/ou de la surface inférieure 12a de ladite structure de caisse 13, lesdites surfaces inférieures étant tournées vers le sol sur lequel est disposé le véhicule 10. Optionnellement, il en va de même pour la traverse 3, par exemple de sorte à la fixer au contact de la surface inférieure 12a de la structure de caisse 13. Une telle fixation est réalisée par l'intermédiaire d'éléments de fixation 41. Ainsi, le berceau 12 et/ou la structure de caisse 13 d'une part peu(ven)t être au moins en partie superposé(s) au dispositif de support 2 de sorte que ce dernier est au moins en partie interposé entre le berceau 12 et/ou la structure d'une part et le sol d'autre part le long d'au moins une direction, notamment ici le long de la direction verticale Z.

Ces principes s'appliquent dans l'ordre inverse pour permettre le démontage de l'agencement 1 selon l'invention au sein du véhicule 10.

Les différents composants fixés sur le dispositif de support 2 peuvent ainsi être simultanément installés dans le véhicule 10 par l'intermédiaire du dispositif de support 2, celui-ci formant une plateforme commune. Il en va de même en cas de démontage. Le dispositif de support 2 permet ainsi un montage simplifié de différents composants et systèmes au sein du véhicule 10, d'une part en limitant le nombre de supports séparés à monter en différents points du véhicule 10 et, d'autre, part en permettant un montage et une fixation du dispositif de support 2 par-dessous dans le véhicule 10.

La présente invention propose ainsi un dispositif de support permettant simultanément le renfort de la structure avant du véhicule et le support d'une pluralité de composants équipés en face avant du véhicule. Le dispositif de support selon l'invention permet un montage et une manipulation simplifiés d'une pluralité de composants en réduisant le nombre de références impliquées dans la structure avant du véhicule et en permettant une fixation simultanée par-dessous de divers composants au niveau du berceau et/ou de la structure de caisse. Le dispositif de support présente une grande modularité permettant une répétabilité et une adaptabilité de l'invention à divers modèles de véhicules. La centralisation de la fixation d'une pluralité de composants sur le dispositif de support permet une réduction du nombre de supports annexes et donc des coûts. Optionnellement, le dispositif de support peut permettre une séparation spatiale au moins partielle de systèmes électriques et hydrauliques. Enfin, l'invention permet l'optimisation et la simplification de l'assemblage de l'avant du véhicule en réduisant le nombre de supports indépendants vissés et en permettant une simplification des parcours de câbles électriques et/ou conduits de circulation d'un fluide, ce qui permet une meilleure ergonomie de montage, une meilleure sécurisation du procédé et un accès simplifié aux différents composants équipés en face avant du véhicule en centralisant au moins une partie de leurs fixations au niveau du dispositif de support.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Dispositif de support (2) multifonction pour véhicule (10) automobile, comprenant :
- une traverse (3) et une pluralité de tirants (4), dont au moins deux tirants (4) reliés à des extrémités de ladite traverse (3), configurés pour être fixés au moins au niveau d'un berceau (12) et/ou d'une structure de caisse (13) du véhicule (10) par-dessous de sorte à s'étendre au contact d'une surface inférieure (12a, 13a) dudit berceau (12) et/ou de ladite structure de caisse (13) ;
- un corps (5) configuré pour supporter au moins un premier composant (7a) ;
- une pluralité de pattes (6), reliées à la traverse (3), chaque patte (6) comprenant au moins une première zone de fixation (61), configurée pour porter au moins un deuxième composant (7b), tel qu'un câble (15) ou conduit (14), et une deuxième zone de fixation (63) configurée pour porter au moins un troisième composant (7c), tel qu'un câble (15) ou conduit (14).

2. Dispositif de support (2) selon la revendication précédente, dans lequel les tirants (4) s'étendent au moins en partie d'un premier côté (30a) d'un plan médian (30), s'étendant parallèlement à la traverse (3) et la séparant en deux, et la pluralité de pattes (6) s'étend essentiellement d'un deuxième côté (30b), opposé au premier côté (30a), dudit plan.

3. Dispositif de support (2) selon l'une des revendications précédentes, dans lequel :
- le dispositif de support (2) comprend, en outre, au moins un organe de support (9) relié à la traverse (3) apte à porter un composant additionnel (7e) du véhicule (10) ; et/ou
- la traverse (3) et/ou les tirants (4) comprennent des ouvertures (8) aptes à recevoir des moyens de fixation (81) de sorte à porter au moins un composant additionnel (7e).

4. Dispositif de support (2) selon l'une des revendications précédentes, dans lequel :
- la traverse (3) et les tirants (4) forment un ensemble monobloc ; ou
- les tirants (4) sont rapportés et fixés à la traverse (3), notamment par soudage ou vissage.

5. Dispositif de support (2) selon l'une des revendications précédentes, dans lequel les pattes (6) sont rapportées et :
- fixées à la traverse (3) par soudage ; ou
- fixées à la traverse (3) par l'intermédiaire d'un moyen de fixation.

6. Dispositif de support (2) selon l'une des revendications précédentes, dans lequel :
- la première zone de fixation (61) et la deuxième zone de fixation (63) des pattes (6) sont disposées dans des plans distincts, transversaux, de sorte que le deuxième composant (7b) et le troisième composant (7c) s'étendent à distance non nulle le long d'au moins une direction ; et/ou
- au moins l'une des pattes (6) est au moins en partie interposée entre le deuxième composant (7b) et le troisième composant (7c) le long d'au moins une direction.

7. Agencement (1) comprenant un dispositif de support (2) selon l'une des revendications précédentes, et comprenant au moins un premier composant (7a), un deuxième composant (7b) et/ou un troisième composant (7c) sélectionnés parmi un conduit (14) de circulation d'un fluide, un câble (15), un calculateur, un groupe motopropulseur (11), un filtre ou un dispositif d'échappement (17) du véhicule (10).

8. Véhicule (10) automobile comprenant un berceau (12), une structure de caisse (13) et un dispositif de support (2) selon l'une des revendication 1 à 6 et/ou un agencement (1) selon la revendication 7, la pluralité de tirants (4) et/ou la traverse (3) étant fixée(s) au niveau d'au moins l'une parmi des surfaces inférieures du berceau (12) et de la structure de caisse (13) par-dessous de sorte à s'étendre au contact de celle(s)-ci, lesdites surfaces inférieures étant configurées pour être tournées vers un sol sur lequel le véhicule (10) est disposé.

9. Véhicule (10) automobile selon la revendication précédente, comprenant une partie avant et une partie arrière, le dispositif de support (2) étant disposé de sorte que la pluralité de pattes (6) et le deuxième côté (30b) du plan médian (30) présentent une plus grande proximité avec la partie arrière du véhicule (10) que les tirants (4) et le premier côté (30a) du plan médian (30).

10. Procédé de montage d'un agencement (1) selon la revendication 7 dans un véhicule (10) comprenant :
- la fixation des pattes (6) sur la traverse (3) ;
- le positionnement et la fixation du premier composant (7a), du deuxième composant (7b) et/ou du troisième composant (7c) sur le dispositif de support (2) ; puis
- la fixation par-dessous du dispositif de support (2) au niveau du berceau (12) et/ou de la structure de caisse (13) par l'intermédiaire des tirants (4) et/ou de la traverse (3).
